(19) Europäisches Patentamt
European Patent Office
Office européen des brevets

(11) Publication number: 0 509 535 A1

(12) EUROPEAN PATENT APPLICATION

(21) Application number: 92106682.5

(22) Date of filing: 16.04.92

(51) Int. Cl.5: C08L 25/02, C08K 5/00, C08K 3/22, //(C08L25/02, C08K5:02,3:22,C08L27:18), (C08L25/02,C08K5:03,3:22, C08L27:18)

(30) Priority: 19.04.91 IT MI911092

(43) Date of publication of application: 21.10.92 Bulletin 92/43

(84) Designated Contracting States: AT BE CH DE DK ES FR GB GR LI LU NL SE

(71) Applicant: ECP ENICHEM POLIMERI S.r.l.
16, Piazza della Repubblica
I-20124 Milano(IT)

(72) Inventor: Fasulo, Gian Claudio,Dr.
11, via Puccini
San Silvestro, Mantova(IT)
Inventor: Mori, Francesco, Dr.
31, Piazza R. Simoni
I-37100 Verona(IT)
Inventor: Nocci, Roberto, Dr.
86/T, via Cisa
I-46030 Virgilio, Mantova(IT)
Inventor: Borghi, Italo, Dr.
49, via Aldighieri
I-44100 Ferrara(IT)

(74) Representative: Weinhold, Peter, Dr. et al
Patentanwälte Dipl.-Ing. G. Dannenberg Dr. P. Weinhold Dr. D. Gudel Dipl.-Ing. S. Schubert Dr. P. Barz Siegfriedstrasse 8
W-8000 München 40(DE)

(54) **Flame-retardant thermoplastic composition.**

(57) Described is a flame-retardant thermoplastic composition comprising a styrene polymer containing an effective quantity of a synergetic mixture of a chlorinated hydrocarbon containing at least 40% by weight of combined chlorine, an inorganic oxygen containing compound of a metal belonging to groups III to VI of the periodic table, and polytetrafluoroethylene having a particle size of not more than 20 µm.

EP 0 509 535 A1

The present invention relates to a flame-retardant thermoplastic composition.

More specifically, the present invention relates to a flame-retardant thermoplastic composition based on styrene polymers and having excellent flow properties and a satisfactory operating stability and showing no formation of toxic combustion products.

Styrene polymers and their use are well-known in the art, see, e.g., "Polystyrene" - W.C. Teach and G.C. Kiessling (Reinhold Plastics Applications Series), Reinhold Publ. Corp., New York (1960) and "Modern Plastics Encyclopedia" 1972 - 1973 Vol. 49: No. 10A, October 1972, pages 97-99, 161 and 271-272.

It is also well-known in the art that styrene polymers, like most other synthetic resins, burn very easily and spread flames. This disadvantage enormously limits the fields of application of styrene polymers.

In order to reduce or eliminate the flammability of these polymers it is common practice to incorporate therein certain additives generally known as flame-retardants.

In the presence of these agents, combustion is delayed or even entirely prevented owing to various action mechanisms. Flameretardants which act chemically, interfering with the radicalic reactions of the combustion process are most commonly used.

The halogenated derivatives of organic compounds, such as chloroparaffins, hexa-halo-benzenes, pentabromo-diphenyl, pentabromo-diphenyl-ether, decabromo-diphenyl-oxide and octabromo-diphenyl are widely used for said purpose. In many cases, the effectiveness of these halogenated derivatives can be further increased by the additional incorporation of suitable synergetic inorganic compounds, such as, for example, antimony trioxide ($Sb_2O_3$).

A disadvantage, however, of these known flame-retardants or combinations of compounds is that they frequently adversely affect some of the properties of the polymer. In fact, a substantial decrease in the impact strength, elongation and aging-resistance as well as in the operating stability can be observed in the polymers to which these flame-retardants have been added.

Furthermore, some of these flame-retardants develop toxic substances during the processing and/or combustion, as described in CHEMOSPHERE - Vol. 15, No. 5, pages 649-652 (1989) and Vol. 18, No. 1-6, pages 1235-1242 (1989).

Apart from chemical inhibition, the burning sample can also be extinguished by separation of the burning part in the form of drops, either burning or not burning. The molten polymer drips if the viscosity of the polymer at the combustion temperature is sufficiently low. In this case, the flame-retardant acts as lubricant or induces the degradation of the polymer at elevated temperatures, accompanied by a decrease in the viscosity. The activity of a flame-retardant is complex and various mechanisms operate simultaneously.

Various regulations require that the burning drops do not inflame the organic material (for example cotton, wool) onto which they drip. Consequently, apart from the change in viscosity, additives having a simultaneous inhibiting effect on the radicalic combustion reactions are preferred. Compounds which effectively decrease the viscosity of the polymer at the combustion temperature and at the same time chemically inhibit the combustion reaction can be used in much lower concentrations, resulting in considerable savings. In addition, in this case, the decrease in important mechanical properties such as impact strength or elongation is lower compared to that which occurs with flame-retardants which are exclusively inhibitors of free radicals.

The flame extinction mechanism is taken into account in the flammability classification of polymers in accordance with standard regulations. The most commonly used is the extremely rigorous vertical UL-94 test (developed by Underwriters' Laboratories, USA). According to this test, materials which can be extinguished by the dripping of the burning melt are classified in category V-2 in case of burning of surgical cotton by the inflamed drops. Plastic materials classified as V-2 are not suitable for certain applications, for example when the burning drops may cause damage to the public.

The disadvantage of many flame-retardants of this kind is that the degradation of the polymer, which favours the extinction of the fire by means of dripping, very often begins to a considerable extent at the operating temperature of the polymer. This phenomenon is totally undesirable if the good properties of the modified polymer are to be retained.

There has now been found a new synergetic combination of flame-retardant agents which, incorporated into styrene polymers, results in high flame-retardant values (i.e., which can be classified according to the UL-94 standard in category V-0) without negatively influencing the physico-mechanical, flow and stability properties of the polymers.

This synergetic combination essentially comprises:

(i) a hydrocarbon containing at least 40% by weight of combined chlorine:

(ii) an inorganic oxygen containing compound of a metal belonging to groups III, IV, V or VI of the Periodic Table, and

(iii) polytetrafluoroethylene (PTFE) in powder form having a particle size of not higher than 20 µm.

The present invention, consequently, provides a flame-retardant thermoplastic composition comprising as essential components a styrene polymer in which an effective quantity of a synergetic mixture is thoroughly incorporated, which mixture is composed of the above components (i), (ii) and (iii).

In the synergetic mixture of the present invention, the quantity of PTFE usually is rather low and, generally not higher than 5% by weight with respect to the sum of the three components (i), (ii) and (iii), quantities of from 0.1 and 3% being preferred.

The relative amounts of chlorinated hydrocarbon (i) and inorganic oxygen containing compound (ii) can vary within a wide range; generally the weight ratio (i) : (ii) ranges from 10:1 to 1:1, preferably from 5:1 to 2:1.

The synergetic mixture of stabilizers is added to the styrene polymer in sufficient quantities to obtain the desired flame-retardant effect. The quantity of synergetic mixture added generally is at least 10% by weight and preferably 20 to 30%, with respect to the total weight of polymer and synergetic mixture, especially when a flame-retardant effect classified in category V-0 is required for thicknesses of the end product of less than 2 mm.

In accordance with the present invention, a preferred flame-retardant thermoplastic composition with good flow properties, satisfactory operating stability, even at high temperatures, and without the formation of toxic combustion products, comprises:

- from 84.9 to 70% by weight of styrene polymer;
- from 10 to 70% by weight of chlorinated hydrocarbon (i);
- from 5 to 9.5% by weight of inorganic oxygen containing compound (ii); and
- from 0.1 to 0.5% by weight of PTFE (iii);

the above percentages being based on the total weight of polymer and synergetic mixture.

The term "styrene polymer", as used in the present description and the appended claims, refers to any solid, thermoplastic (co)polymer composed either totally or for the most part (i.e., containing a chemically bound quantity of at least 50% by weight) of one or more styrene and/or vinyl-aromatic compounds of general formula (I):

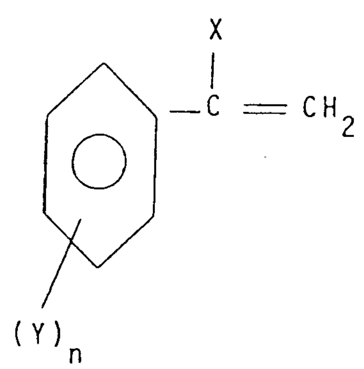

(I)

wherein X represents hydrogen or an alkyl radical having from 1 to 4 carbon atoms (e.g. methyl); n is zero or an integer of from 1 to 5 and Y represents halogen (i.e. Cl, Br, I or F) or an alkyl radical having from 1 to 4 carbon atoms (e.g. methyl or ethyl).

Specific examples of styrene (vinyl-aromatic) compounds having the above general formula are styrene; methyl-styrene; mono-, di-, tri-, tetra- and penta-chloro-styrene and the corresponding alpha-methyl-styrenes; styrenes alkylated in the nucleus and the corresponding alpha-methyl-styrenes such as ortho- and para-methyl-styrenes, ortho- and para-ethyl-styrenes; ortho- and para-methyl-alpha-methyl-styrenes, etc.

These monomers can be used alone or mixed with each other or with other copolymerizable ethylenically unsaturated comonomers such as, for example, maleic anhydride, acrylonitrile, methacrylonitrile, $C_1$-$C_4$ alkyl esters of acrylic or methacrylic acid etc., in quantities of up to 50% by weight.

The term "styrene polymers" also includes the above polymers and copolymers modified with rubber to form high impact-strength polymers.

The rubber can be either natural or synthetic, such as polybutadiene, high, medium and low viscosity (cis)polybutadiene, polyisoprene, the copolymers of butadiene and/or isoprene with styrene or other monomers, ethylene-propylene copolymers, ethylene-propylene-diene (EPDM) terpolymers, styrene-conjugated diene linear block copolymers of the type B/S or S-B/S, wherein S represents polymer blocks based

on styrene monomer and B/S represents random and/or tapered copolymers of styrene and conjugated diene monomers, preferably having a styrene monomer content of from 20 to 60% by weight and, correspondingly, 80 to 40% by weight of conjugated diene units.

The rubber component in the impact-resistant styrene polymer is usually present in quantities of from 5 to 20% by weight and can be of a single type or a mixture of different rubbers.

Polystyrene modified with a mixture composed of 90 to 99% by weight of polybutadiene and 10 to 1% by weight of a B/S and/or S-B/S linear block copolymer mentioned above is particularly preferred.

The preparation of the styrene polymer may be carried out by following any of the known polymerization processes in suspension, mass-suspension or in continuous mass.

A critical and important aspect of the chlorinated hydrocarbon (i) of the synergetic mixture of flame-retardants of the present invention is that it must have a content of combined chlorine of at least 40%, and preferably at least 60% by weight and up to exhaustive chlorination, i.e., up to 73.1%, corresponding to the formula $C_nH_{n+2}Cl_n$. The hydrocarbon (i) generally is of the saturated type and with a basically linear structure, containing from 10 to 30 carbon atoms (n = 10 - 30).

Component (i) is preferably a linear saturated hydrocarbon containing from 20 to 24 carbon atoms and having a content of combined chlorine of from 65 to 72% by weight.

Chlorinated hydrocarbons are viscous liquids or resinous solids with a low boiling point, mainly depending on the type of paraffinic starting material and on the percentage of chlorine contained in the molecule.

The chlorinated hydrocarbons (i) are produced commercially, within a wide range of properties, and are known on the market, for example under the trade-names THERMOGUARD ® (ATO); HORDAFLAM ® (Hoechst); CLOPARIN ® (Caffaro); and CHLOROWAX ® (Occidental Chemical Corp.).

The inorganic oxygen containing compound (ii) of a metal of groups III to VI of the Periodic Table may for example be an oxide, hydroxide, carbonate, silicate, molybdate and/or a more complicated compound of the corresponding metal(s), such as a mineral.

Specific examples thereof are antimony trioxide ($Sb_2O_3$), aluminium oxide, hydrous aluminium oxide, molybdenum trioxide, kaolin, $H_4SiO_4$, hydrous tin oxide, $2ZnO.3B_2O_3$. $3.5H_2O$, ZnO, $TiO_2$, $As_2O_3$, $As_2O_5$, $ZnBO_4$, SbOCl, etc. $Sb_2O_3$ is preferred.

The polytetrafluoroethylene (PTFE), i.e., component (iii) of the flame-retardant synergetic mixture of the present invention, is used in very fine powder form having an average diameter of not more than 20 $\mu$m and preferably from 5 to 0.1 $\mu$m. This polymer can be obtained, e.g., by means of a polymerization process in a dispersion of tetrafluoroethylene, in the presence of organic and inorganic peroxidic catalysts at pressures of from 10 to 200 atm and at temperatures of from 0 to 200 °C.

Provided that the form and size of the particles is appropriate, any type of PTFE can be used in the synergetic mixture of the present invention. Examples of suitable types of PTFE are those sold under the tradenames TEFLON ® (E.I. Du Pont de Nemours and Company); ALGOFLON ® (Montefluos); and FLUON ® (ICI). These PTFEs can be homopolymers or copolymers of TFE with a highly copolymerizable monomer wherein the TFE is present as the major constituent of the copolymer, preferably at a level of at least 80% b.w.

The compositions of the present invention can be prepared by using any of the conventional mixing procedures.

The mixing is generally carried out in the molten state, using well-known equipment such as single and double screw extruders, Banbury mixers, mixing rollers etc., usually at temperatures of from 170 to 220 °C.

The components of the composition can be premixed at room temperature or added separately or combined with each other during the extrusion process.

The compositions may also contain stabilizers, antiacidic agents and/or other additives thoroughly incorporated therein, such as plasticizers, lubricants, flow modifiers, antistatic agents, dyes, pigments, glass fibres and/or other inorganic fillers etc.

The compositions of the present invention are easily processable, especially by means of injection moulding, and have a combination of properties which makes them suitable for use in the manufacture of products having good mechanical and excellent flame-retardant characteristics. These mixtures may consequently be applied, e.g., in the fields of electronics and technical articles which are intended to come into contact with sources of heat and/or electric voltage.

The following examples are to further illustrate the present invention without limiting it in any way.

In said examples, all parts and percentages are by weight unless specified otherwise.

EXAMPLES 1 TO 4

The following materials were mixed in a rotating-drum mixer at room temperature:

- impact-resistant polystyrene containing 7.5% by weight of polybutadiene rubber and having an average molecular weight of 170,000, in the quantities shown in Table I below;
- a chloroparaffin (i) sold under the tradename THERMOGUARD ® (ATO), in the quantities shown in Table I below;
- $Sb_2O_3$ (ii) in the quantities shown in Table I below; and
- PTFE (iii) sold under the tradename ALGOFLON® (Montefluos), in powder form having an average diameter shown in Table I and in the quantities specified in the same Table.

The mixtures thus obtained were dried at 80°C for 4 hours and extruded by means of a single-screw BANDERA TR45 extruder (length/diameter ratio of 25) with degassing and at a temperature of 180°C.

The strands leaving the extruder were cut to obtain pellets which were dried for 4 hours at 80°C.

To determine the following characteristics, the pellets were injection moulded at a temperature of 180-200°C on a NEGRI & BOSSI V-17-110 FA press to obtain test samples having the dimensions required by the corresponding standards.

The properties measured on the test samples thus obtained are shown in Table I below.

The following methods were used to determine the characteristics of the compositions of the present invention.

## Flame-retardant property

The flammability was determined in accordance with the UL 94 standard described in "Standard For Tests for Flammability of Plastic Materials For Parts in Devices and Appliances" 3rd Edition, January 28,1980, on test samples having dimensions of 127x12.7x1.59 mm (5"x0.5"x0.0625").

## Mechanical Properties

The IZOD notch resilience was determined at 23°C, in accordance with ASTM D 256, on test samples having a thickness of 3.2 mm, together with the tensile strength, ultimate elongation and elastic modulus in accordance with ASTM D 638.

## Thermal Properties

The VICAT B softening temperature (5 kg in oil) was determined, in accordance with ISO 306, with a temperature increase of 50°C/hour.

## Rheological Properties

The Melt-Flow-Index (M.F.I.) was determined, in accordance with ASTM D 1238, at 200°C and 5 kg.

TABLE I

| COMPOSITION | QUANTITY | 1* | 2* | 3 | 4 |
|---|---|---|---|---|---|
| | | EXAMPLE NUMBER | | | |
| - Shock resistant polystyrene | % by weight | 77 | 77 | 77 | 73.5 |
| - THERMOGUARD® | % by weight | 17.6 | 17.6 | 17.6 | 20 |
| - $Sb_2O_3$ | % by weight | 5.4 | 5.4 | 5.4 | 6.5 |
| - ALGOFLON® | | | | | |
| Dimension: 500-700 µm | parts by weight | -- | 0.3 | -- | -- |
| less than 5 µm | parts by weight | -- | -- | 0.3 | 0.1 |
| FLAME RETARDANT PROPERTIES | UNIT | | | | |
| . UL 94 | | V2 | V2 | V0 | V0 |
| MECHANICAL PROPERTIES | | | | | |
| . IZOD | J/m | 60 | 58 | 58 | 76 |
| . Yield strength | MPa | 26.5 | 26 | 26 | 23 |
| . Breaking load | MPa | 21 | 21.5 | 21.5 | 23 |
| . Ultimate elongation | % | 25 | 30 | 30 | 26 |
| . Elastic modulus | MPa | 2150 | 2200 | 2200 | 1800 |
| THERMAL PROPERTIES | | | | | |
| . VICAT | °C | 86.5 | 87 | 87 | 81 |
| RHEOLOGICAL PROPERTIES | | | | | |
| . M.F.I. | g/10' | 9.8 | 10 | 10 | 11.2 |

* Comparative example

EXAMPLES 5 AND 6

Operating under the same conditions as in examples 1 to 4, mixtures were prepared by using an impact-resistant polystyrene having an average molecular weight of 170,000 and containing, dispersed in

the polymeric matrix, 7.5% by weight of polybutadiene rubber and 4% by weight of an S-B/S linear block polymer (CARIFLEX ® TR 1102 produced and sold by SHELL) containing 30% of styrene and 70% of butadiene and having an average molecular weight of 75,000.

The compositions of the mixtures and their properties are shown in Table II below.

TABLE II

| COMPOSITION | QUANTITY | EXAMPLE NUMBER 5 | EXAMPLE NUMBER 6 |
|---|---|---|---|
| - Shock resistant polystyrene | % by weight | 73.5 | 73.5 |
| - THERMOGUARD® | % by weight | 20 | 20 |
| - $Sb_2O_3$ | % by weight | 6.5 | 6.5 |
| - ALGOFLON® | | | |
| Dimension: less than 5 µm | parts by weight | 0.1 | -- |
| about 0.1 µm | parts by weight | -- | 0.2(*) |
| FLAME RETARDANT PROPERTIES | UNIT | | |
| . UL 94 | | V0 | V0 |
| MECHANICAL PROPERTIES | | | |
| . IZOD | J/m | 88 | 88 |
| . Yield strength | MPa | 27 | 27 |
| . Breaking load | MPa | 25 | 25 |
| . Ultimate elongation | % | 18 | 18 |
| . Elastic modulus | MPa | 2000 | 2000 |
| THERMAL PROPERTIES | | | |
| . VICAT | °C | 82 | 82 |
| RHEOLOGICAL PROPERTIES | | | |
| . M.F.I. | g/10' | 11.6 | 11.6 |

(*) = Added as aqueous dispersion at 60% by weight of ALGOFLON®

EXAMPLE 7

Operating under the same conditions as in examples 1 to 4, the following mixture was prepared:
- 73.5% by weight of impact-resistant polystyrene having an average molecular weight of 170,000 and containing, dispersed in the polymeric matrix, 7.5% by weight of polybutadiene rubber and 5% by weight of an S-B/S linear block copolymer (EUROPRENE ® SOL T 168,produced and sold by Enichem Elastomeri S.p.A.) containing 60% of butadiene and 40% of styrene and having an average molecular weight of 75,000;
- 20% by weight of chloroparaffin (THERMOGUARD ® of ATO);
- 6.5% by weight of $Sb_2O_3$, and
- 0.2 parts by weight of PTFE (ALGOFLON ® of Montefluos) having an average diameter of 0.1 µm.

The properties of the mixture thus obtained were:

| | | |
|---|---|---|
| Flame-retardant Property: | UL 94<br>IZOD<br>Yield strength<br>Breaking load<br>Ultimate elongation<br>Elastic modulus | VO<br>91 J/m<br>24 MPa<br>23 MPa<br>21%<br>1950 MPa |
| Thermal Properties:<br>Rheological Properties: | VICAT<br>M.F.I. | 81 °C<br>16g/10' |

**Claims**

1. Flame-retardant thermoplastic composition comprising a styrene polymer and a synergetic mixture of
   (i) at least one chlorinated hydrocarbon containing at least 40% by weight of combined chlorine;
   (ii) at least one inorganic oxygen containing compound of one or more metals belonging to groups III, IV, V and VI of the Periodic Table; and
   (iii)polytetrafluoroethylene (PFTE) having a particle size not higher than 20 µm.

2. Composition according to claim 1, wherein the quantity of polytetrafluoroethylene is not more than 5% by weight and preferably from 0.1 to 3% by weight with respect to the sum of the components (i), (ii) and (iii).

3. Composition according to any one of claims 1 and 2, wherein the weight ratio of components (i) and (ii) ranges from 10:1 to 1:1 and preferably from 5:1 to 2:1.

4. Composition according to any one of claims 1 to 3, wherein the quantity of synergetic mixture is at least 10% by weight and preferably from 20 to 30%, with respect to the total weight of the styrene polymer and the synergetic mixture.

5. Composition according to any one of claims 1 to 4, comprising
   - from 84.9 to 70% by weight of styrene polymer;
   - from 10 to 20% by weight of component (i);
   - from 5 to 9.5% by weight of component (ii); and
   - from 0.1 to 0.5% by weight of component (iii);

   all percentages being based on the total weight of styrene polymer and components (i), (ii) and (iii).

6. Composition according to any one of claims 1 to 5, wherein the styrene polymer is modified with 5 to 20% by weight of a rubber selected from polybutadiene, polyisoprene, copolymers of butadiene and/or of isoprene with styrene or with other monomers, ethylene-propylene copolymers, ethylene-propylene-diene (EPDM) terpolymers, B/S or S-B/S type styrene-conjugated diene linear block copolymers wherein S represents polymeric blocks based on styrene monomer and B/S represents random and/or tapered blocks of copolymers of styrene and conjugated diene, having a content of styrene monomer of from 20 to 60% by weight, and mixtures thereof.

7. Composition according to claim 6, wherein the styrene polymer is polystyrene modified with a rubber mixture composed of 90 to 99% by weight of polybutadiene and 10 to 1% by weight of a B/S and/or S-B/S linear block copolymer.

8. Composition according to any one of claims 1 to 7, wherein component (i) contains at least 60% by weight and up to exhaustive chlorination of combined chlorine.

9. Composition according to any one of claims 1 to 8, wherein component (i) is selected from basically linear saturated hydrocarbons having from 10 to 30, preferably from 20 to 24 carbon atoms and having a content of combined chlorine of from 65 to 72% by weight.

10. Composition according to any one of claims 1 to 9, wherein component (ii) comprises $Sb_2O_3$.

11. Composition according to any one of claims 1 to 10, wherein component (iii) has a particle size of from 5 to 0.1 μm.

12. Synergetic flame retardant mixture, comprising components (i), (ii) and (iii) as defined in any one of claims 1 to 3 and 8 to 11.

13. Molded articles, made of a composition according to any one of claims 1 to 11.

European Patent Office

# EUROPEAN SEARCH REPORT

Application Number

EP 92 10 6682

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 154 138 (BAYER AG) | 1-5 | C08L25/02 |
| | * page 2, line 22 - page 3, line 4 * | | C08K5/00 |
| Y | * page 3, line 5 - line 7 * | 1 | C08K3/22 |
| | * page 6, line 20 - line 25 * | | //(C08L25/02, |
| Y | * page 7, line 1 - line 10 * | 1 | C08K5:02,3:22, |
| | * page 7, line 15 - line 18 * | | C08L27/18) |
| | * claims * | | (C08L25/02, |
| | --- | | C08K5:03,3:22, |
| A | EP-A-0 445 001 (ATOCHEM) | 1,3 | C08L27/18) |
| | * page 2, line 1 - line 8 * | | |
| Y | * page 2, line 50 - page 3, line 1 * | 1 | |
| Y | * page 4; example 2 * | 1 | |
| | * claims 1,4-11 * | | |
| | ----- | | |

TECHNICAL FIELDS SEARCHED (Int. Cl.5)

C08L
C08K

The present search report has been drawn up for all claims

| Place of search | Date of completion of the search | Examiner |
|---|---|---|
| THE HAGUE | 21 JULY 1992 | ENGEL S.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document